**Europäisches Patentamt**

**European Patent Office**

**Office européen des brevets**

(19)

(11) Numéro de publication : **0 475 793 A2**

(12) # DEMANDE DE BREVET EUROPEEN

(21) Numéro de dépôt : **91402115.9**

(22) Date de dépôt : **29.07.91**

(51) Int. Cl.⁵ : **G01F 23/30,** G01F 23/32

(30) Priorité : **06.08.90 FR 9010032**

(43) Date de publication de la demande : **18.03.92 Bulletin 92/12**

(84) Etats contractants désignés : **DE GB IT**

(71) Demandeur : **AUTOMOBILES PEUGEOT 75, avenue de la Grande Armée F-75116 Paris (FR)**
(71) Demandeur : **AUTOMOBILES CITROEN 62 Boulevard Victor-Hugo F-92200 Neuilly-sur-Seine (FR)**

(72) Inventeur : **Blonde, Michel 36 avenue Joffre F-25200 Montbeliard (FR)**

(74) Mandataire : **Habasque, Etienne Joel Jean-François et al Cabinet Lavoix 2, Place d'Estienne d'Orves F-75441 Paris Cédex 09 (FR)**

(54) **Dispositif de mesure du niveau d'un liquide dans un réservoir, notamment de véhicule automobile.**

(57)    Ce dispositif de mesure du niveau d'un liquide dans un réservoir notamment de véhicule automobile, du type comportant un flotteur (1) relié à une extrémité d'un bras de support (2) déplaçable en rotation par rapport à la partie fixe du réservoir (3) et relié à un curseur d'un potentiomètre (4) dont la sortie délivre une indication de niveau en fonction de la position du flotteur dans le réservoir, est caractérisé en ce qu'il comporte des moyens (7) à inertie de détection des accélérations subies par le véhicule et de commande de moyens (8) de blocage du bras de support en position, lorsque lesdites accélérations sont supérieures à un niveau déterminé.

EP 0 475 793 A2

FIG.1

La présente invention concerne un dispositif de mesure du niveau d'un liquide dans un réservoir, notamment de véhicule automobile.

Dans l'état de la technique, ces dispositifs de mesure comportent en général un flotteur relié à une extrémité d'un bras de support déplaçable en rotation par rapport à la partie fixe du réservoir, ce bras étant relié à un curseur d'un potentiomètre dont la sortie délivre une indication de niveau de liquide en fonction de la position du flotteur dans le réservoir.

Ces dispositifs sont par exemple utilisés pour indiquer le niveau de carburant dans le réservoir du véhicule.

Cependant, dès que le véhicule se déplace, le carburant contenu dans ce réservoir est mis en mouvement, ce qui entraîne des oscillations du niveau de celui-ci et donc du flotteur et par conséquent des variations intempestives de l'indication de niveau en sortie du potentiomètre et sur les moyens d'affichage au tableau de bord du véhicule.

On conçois que ceci présente un certain nombre d'inconvénients.

Afin de limiter ces fluctuations, on a déjà proposé différents systèmes d'amortissement des déplacements du bras, par exemple à l'aide de dispositifs à vérins d'amortissement. On se référera par exemple au document FR-A-2 563 336 aux noms des Demanderesses.

D'autres solutions proposées consistent à déconnecter l'indicateur de mesure sur le tableau de bord du véhicule, lorsque la position et/ou le mouvement du véhicule dépassent certaines normes. On se reportera par exemple au document EP-A-O 296 886 au nom de FORD FRANCE S.A.

On connaît également d'après le document DE-A3 011 357 au nom de BMW AG, un dispositif de mesure du niveau d'un liquide dans un réservoir notamment de véhicule automobile, du type comportant un flotteur relié à une extrémité d'un bras de support déplaçable en rotation par rapport à la partie fixe du réservoir et relié à un curseur d'un potentiomètre dont la sortie délivre un indication de niveau en fonction de la position du flotteur dans le réservoir, et des moyens à inertie de détection des accélérations subies par le véhicule et de commande de moyens de blocage du bras de support en position lorsque lesdites accélérations sont supérieures à un niveau déterminé, comprenant au moins une portion de couronne dentée et un organe de blocage relié à la partie fixe du réservoir et déplaçable entre une position escamotée et une position active de blocage de la portion de couronne et donc du bras, sous la commande des moyens de détection.

Dans ce document, les moyens à inertie comprennent un pendule articulé sur une partie fixe du réservoir.

Cependant, ces systèmes présentent des structures relativement complexes et leur coût de fabrication est relativement élevé.

Le but de l'invention est donc de résoudre ces problèmes en proposant un dispositif de mesure de niveau qui soit simple, fiable et qui permette d'éviter les oscillations d'indication de niveau de liquide dans un réservoir.

A cet effet, l'invention a pour objet un dispositif de mesure du niveau d'un liquide dans un réservoir notamment de véhicule automobile, du type comportant un flotteur relié à une extrémité d'un bras de support déplaçable en rotation par rapport à la partie fixe du réservoir et relié à un curseur d'un potentiomètre dont la sortie délivre une indication de niveau en fonction de la position du flotteur dans le réservoir, et des moyens à inertie de détection des accélérations subies par le véhicule et de commande de moyens de blocage du bras de support en position lorsque lesdites accélérations sont supérieures à un niveau déterminé, comprenant au moins une portion de couronne dentée et un organe de blocage relié à la partie fixe du réservoir et déplaçable entre une position escamotée et une position active de blocage de la portion de couronne et donc du bras, sous la commande des moyens de détection, caractérisé en ce que l'organe de blocage est monté déplaçable par coulissement dans la partie fixe du réservoir entre ses deux positions.

Selon un autre aspect, l'invention a également pour objet un dispositif de mesure du niveau d'un liquide dans un réservoir notamment de véhicule automobile, du type comportant un flotteur relié à une extrémité d'un bras de support déplaçable en rotation par rapport à la partie fixe du réservoir et relié à un curseur d'un potentiomètre dont la sortie délivre une indication de niveau en fonction de la position du flotteur dans le réservoir, et des moyens à inertie de détection des accélérations subies par le véhicule et de commande de moyens de blocage du bras de support en position lorsque lesdites accélérations sont supérieures à un niveau déterminé, comprenant au moins une portion de couronne dentée et un organe de blocage relié à la partie fixe du réservoir et déplaçable entre une position escamotée et une position active de blocage de la portion de couronne et donc du bras, sous la commande des moyens de détection, caractérisé en ce que l'organe de blocage comprend un levier de blocage dont une extrémité est articulée sur la partie fixe du réservoir et dont l'autre extrémité est adaptée pour coopérer avec la couronne dentée pour bloquer le bras en position, une branche d'actionnement de ce levier par ces moyens de détection s'étendant entre ses deux extrémités.

L'invention sera mieux comprise à l'aide de la description qui va suivre, donnée uniquement à titre d'exemple et faite en se référant aux dessins annexés, sur lesquels :

– la Fig.1 représente une vue schématique d'un premier mode de réalisation d'un dispositif selon l'invention;
– les Fig.2 et 3 représentent des vues de détail respectivement d'une couronne dentée et d'un organe de blocage entrant dans la constitution du premier mode de réalisation du dispositif représenté sur la Fig.1;
– les Fig. 4 et 5 représentent des vues schématiques d'un second mode de réalisation d'un dispositif selon l'invention; et
– la Fig.6 représente une vue à échelle agrandie d'une tige de blocage entrant dans la constitution du second mode de réalisation du dispositif représenté sur les Fig.4 et 5.

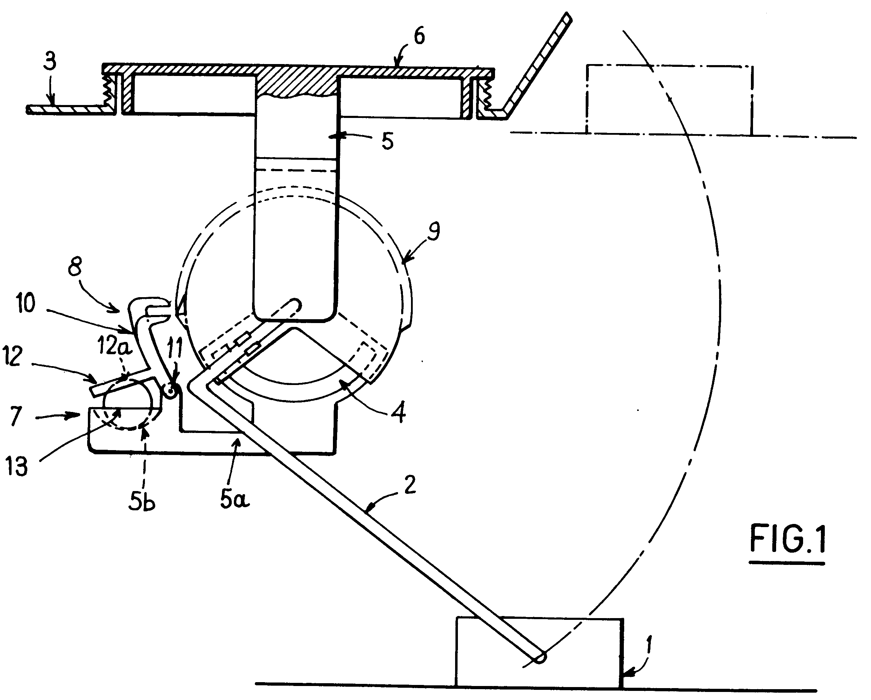

Ainsi qu'on peut le voir sur la Fig.1, un dispositif de mesure, selon l'invention, pour indiquer le niveau d'un liquide contenu dans un réservoir, notamment de véhicule automobile, est du type comportant un flotteur 1 relié à une extrémité d'un bras de support 2 monté déplaçable en rotation par rapport à la partie fixe du réservoir 3.

Ce bras 2 est relié au curseur d'un potentiomètre 4 dont la sortie délivre une indication de niveau en fonction de la position du flotteur dans le réservoir.

De façon classique, cet équipage mobile est fixé à l'une des extrémités d'une structure de support 5 dont l'autre extrémité est fixée à un bouchon 6 du réservoir 3.

Ainsi, le potentiomètre proprement dit est relié à une partie fixe du réservoir, tandis que le curseur est monté déplaçable par rapport à ce potentiomètre par l'intermédiaire du bras qui est articulé à l'extrémité de la structure de support 5.

Selon l'invention, le dispositif comporte des moyens à inertie 7 de détection des accélérations subies par le véhicule et de commande de moyens 8 de blocage du bras de support 2 en position lorsque lesdites accélérations sont supérieures à un niveau déterminé.

Ces moyens de blocage comprennent au moins une portion de couronne dentée 9 qui est reliée au bras de support 2 et est donc montée déplaçable à rotation dans le réservoir. Les moyens de blocage comprennent également un organe de blocage 10 qui est relié à la partie fixe du réservoir, comme cela sera décrit plus en détail par la suite, cet organe de blocage étant monté déplaçable entre une position escamotée et une position active de blocage en position de la portion de couronne dentée et donc du bras, sous la commande des moyens de détection 7.

Dans le mode de réalisation représenté sur cette figure 1, cet organe de blocage est constitué par un levier de blocage 10 dont l'une des extrémités est articulée en 11 sur une portion repliée 5a de la structure de support 5. Ce levier est donc montée déplaçable par pivotement sur cette partie fixe entre ces deux positions active et escamotée.

L'autre extrémité de ce levier, c'est à dire l'extrémité libre de celui-ci, comporte des moyens adaptés pour coopérer avec la couronne dentée pour bloquer celle-ci en position. Ces moyens seront décrits plus en détail par la suite et peuvent par exemple être constitué par des dents de blocage.

Ce levier comporte également entre ses deux extrémités, une branche 12 d'actionnement de ce levier par les moyens de détection, cette branche s'étendant en regard des moyens de détection 7.

Dans le mode de réalisation représenté sur cette figure, ces moyens de détection comprennent un détecteur à bille 13, qui est logée dans une cuvette 5b de la partie repliée 5a de la structure du support 5, cette cuvette étant de dimension supérieure à celle de la bille et étant ménagée en regard des moyens de blocage. La bille est ainsi montée déplaçable sous l'effet des accélérations subies pour le véhicule, entre une position initiale de repos dans laquelle celle-ci s'engage dans un logement de forme complémentaire 12a de la branche 12 du levier de blocage et une position active de commande de ce levier de blocage par déplacement de celui-ci entre sa position escamotée et sa position active de blocage.

On conçoit en effet que dans la position de repos, la bille est en position stable au fond de la cuvette 5b de la structure du support et que sa partie supérieure s'engage parfaitement dans l'évidement 12a de la branche 12 du levier, de sorte que celui-ci est en position escamotée.

Sous l'effet d'une accélération longitudinale ou transversale du véhicule, cette bille 13 quitte sa position de repos et se déplace vers les rebords de la cuvette 5b. Cette bille coopère alors avec les rebords de cette cuvette et les rebords de l'évidement 12a de la branche 12 d'actionnement du levier pour amener celui-ci en position active. Dans cette position, l'extrémité libre de celui-ci et plus particulièrement les dents prévues à cette extrémité, coopèrent avec la portion de couronne dentée 9 pour bloquer celle-ci et donc le bras 2 de support du flotteur, en position. Ce bras étant bloqué, le curseur du potentiomètre est alors également bloqué, de sorte que l'indication de niveau de carburant est stabilisée pendant ces périodes d'accélération.

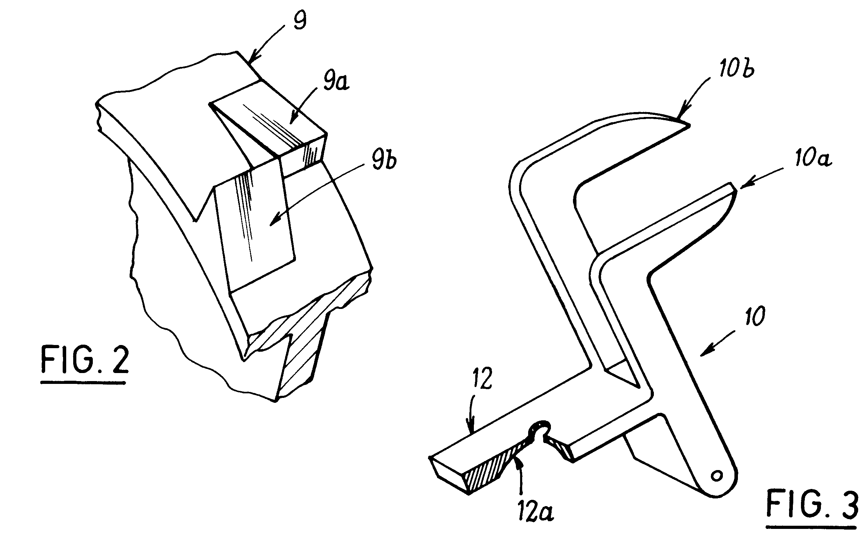

Comme on peut le voir sur les figures 2 et 3, la portion de couronne dentée 9 peut comporter deux séries juxtaposées de crans 9a et 9b à faces de butée opposées, adaptées pour coopérer avec deux branches correspondantes de blocage 10a et 10b prévues à l'extrémité libre du levier de blocage 10.

Ainsi, en position active de blocage, ces branches 10a et 10b viennent se placer de part et d'autre des crans 9a et 9b pour bloquer cette portion de couronne dentée quelle que soit la tendance de déplacement de cette couronne et donc du bras.

Sur la Fig.3, on voit également plus en détail l'évidement 12a de la branche 12, adapté pour coopérer avec la portion correspondante de la bille.

Il va de soi qu'en fonction de la forme interne du réservoir et d'autres considérations, les crans de la couronne dentée peuvent présenter d'autres formes et être symétriques, asymétriques, ou encore décalés.

De même, le levier de blocage à deux branches 10a et 10b peut se présenter sous la forme de deux crochets disposés l'un à côté de l'autre.

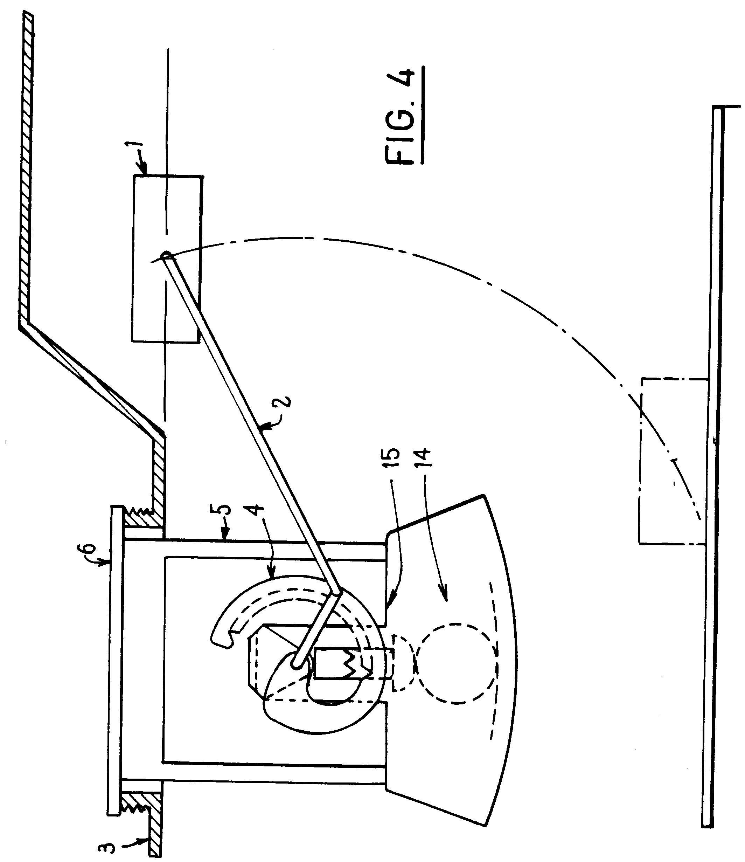

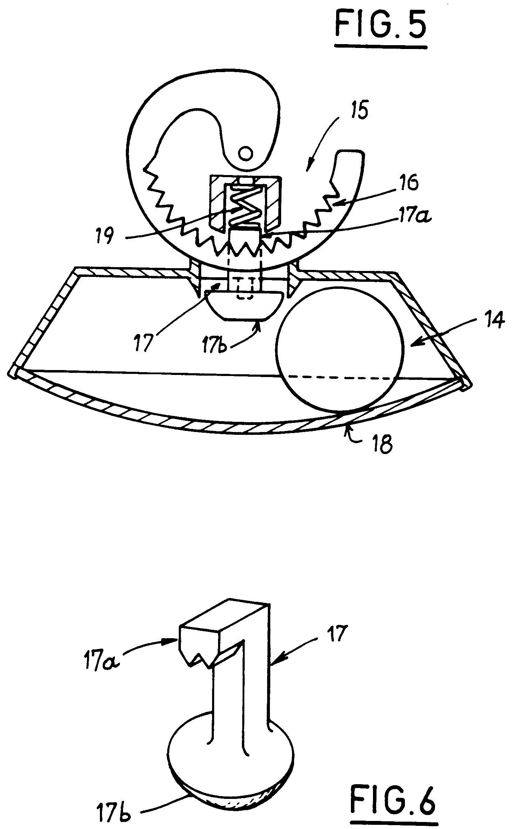

Si l'on se reporte maintenant aux Fig.4 et 5 qui représentent un second mode de réalisation d'un dispositif de mesure selon l'invention, on constate que ce dispositif comporte toujours le flotteur 1 et le bras 2 monté déplaçable en rotation dans le réservoir 3 et dont l'une des extrémités est articulée sur la structure de support 5.

Cette structure de support 5 présente une extrémité reliée au bouchon 6 du réservoir, tandis que son autre extrémité porte le bras de support 2, le potentiomètre 4 et des moyens 14 à inertie de détection des accélérations subies par le véhicule et de commande de moyens de blocage 15 du bras de support en position lorsque lesdites accélérations sont supérieures à un niveau déterminé.

Si l'on se reporte plus particulièrement à la figure 5, on constate que ces moyens de blocage comprennent toujours au moins une portion de couronne dentée 16 reliée au bras de support et un organe de blocage 17 relié à la partie fixe du réservoir et déplaçable entre une position escamotée et une position active de blocage de la position de cette couronne, et donc du bras, sous la commande des moyens de détection 14.

Dans le mode de réalisation représenté, cet organe de blocage comprend une tige de blocage 17 montée déplaçable à coulissement dans la structure de support 5 et donc dans la partie fixe du réservoir, entre ses deux positions active et escamotée. L'une des extrémités 17a de cette tige, est adaptée pour coopérer avec la couronne dentée afin de bloquer celle-ci en position, tandis que l'autre extrémité 17b de cette tige est adaptée pour coopérer avec les moyens de détection 14.

Dans ce mode de réalisation, ces moyens de détection sont également constitués par un détecteur à bille, qui est logée dans une cuvette 18 en regard de ces moyens de blocage, cette bille étant montée déplaçable entre une position initiale de repos et une position active de commande de ces moyens de blocage sous l'effet des accélérations subies par le véhicule.

Comme on peut le voir plus particulièrement sur la Fig.6, cette tige de blocage comporte à son extrémité 17a adaptée pour coopérer avec la couronne dentée, une portion repliée comportant des crans de forme complémentaire à celle des crans de la couronne dentée, pour bloquer celle-ci en position et à son autre extrémité 17b, un patin d'actionnement adapté pour coopérer avec la bille 14.

Si l'on revient maintenant à la Fig.5, on peut constater que des moyens élastiques 19 sont prévus en appui sur l'extrémité 17a de la tige de blocage, pour solliciter cette tige en position active de blocage de la couronne dentée et donc du bras.

En position de repos, la bille se trouve en regard de l'extrémité 17b de cette tige, de sorte que celle-ci est remontée en position escamotée à l'encontre de la sollicitation des moyens élastiques 19. L'ensemble bras-couronne dentée, peut alors se déplacer librement par rapport au reste du réservoir.

Sous l'effet d'une accélération, la bille quitte cette position initiale de repos, de sorte que la tige peut descendre de sa position escamotée vers sa position active, sous l'effet des moyens de sollicitation élastiques 19.

En position active, les dents prévues à l'extrémité correspondante 17a de cette tige, coopèrent avec les dents correspondantes de cette couronne dentée, pour bloquer celle-ci par rapport à la partie fixe du réservoir.

Bien entendu, d'autres modes de réalisation peuvent être envisagés.

Ainsi, les moyens de blocage peuvent être constitués par tout organe de blocage approprié et les moyens à inertie de détection des accélérations subies par le véhicule, peuvent également être constitués par un pendule ou autre.

## Revendications

1. Dispositif de mesure du niveau d'un liquide dans un réservoir notamment de véhicule automobile, du type comportant un flotteur (1) relié à une extrémité d'un bras de support (2) déplaçable en rotation par rapport à la partie fixe du réservoir (3) et relié à un curseur d'un potentiomètre (4) dont la sortie délivre une indication de niveau en fonction de la position du flotteur dans le réservoir, et des moyens (14) à inertie de détection des accélérations subies par le véhicule et de commande de moyens (15,16) de blocage du bras de support en position lorsque lesdites accélérations sont supérieures à un niveau déterminé, comprenant au moins une portion de couronne dentée (16) et un organe de blocage (17) relié à la partie fixe du réservoir (3) et déplaçable entre une position escamotée et une position active de blocage de la portion de couronne et donc du bras, sous la commande des moyens de détection (14), caractérisé en ce que l'organe de blocage (17) est monté déplaçable par coulissement dans la partie fixe du réservoir entre ses deux positions.

2. Dispositif selon la revendication 1, caractérisé en ce que l'organe de blocage (17) comprend une tige de blocage dont une extrémité (17a) est adaptée pour coopérer avec la couronne dentée et dont l'autre extrémité (17b) est adaptée pour coopérer avec les moyens de détection (14).

3. Dispositif selon l'une quelconque des revendications précédentes, caractérisé en ce que les moyens de détection (14) comprennent un détecteur à bille, logée dans une cuvette (18) de la partie fixe du réservoir, en regard des moyens de blocage (15) et déplaçable entre une position initiale de repos et une position active de commande de ces moyens de blocage sous l'effet d'une accélération.

4. Dispositif selon les revendications 2 et 3, caractérisé en ce que ladite bille (14) est disposée en regard de l'extrémité correspondante (17b) de la tige (17) de blocage pour amener celle-ci en position active de blocage lors d'un déplacement de la bille hors de sa position de repos sous l'effet d'une accélération supérieure audit niveau déterminé.

5. Dispositif selon la revendication 4, caractérisé en ce qu'il comporte des moyens élastiques (19) sollicitant l'organe de blocage en position active.

6. Dispositif selon la revendication 4 ou 5, caractérisé en ce que l'extrémité correspondante (17b) de la tige, comporte un patin d'actionnement.

7. Dispositif selon l'une quelconque des revendications précédentes, caractérisé en ce que l'extrémité (17a) de l'organe de blocage (17) adaptée pour coopérer avec la couronne dentée comporte au moins deux dents de forme complémentaire à celle des dents de la couronne dentée.

8. Dispositif de mesure du niveau d'un liquide dans un réservoir notamment de véhicule automobile, du type comportant un flotteur (1) relié à une extrémité d'un bras de support (2) déplaçable en rotation par rapport à la partie fixe du réservoir (3) et relié à un curseur d'un potentiomètre (4) dont la sortie délivre une indication de niveau en fonction de la position du flotteur dans le réservoir, et des moyens (7) à inertie de détection des accélérations subies par le véhicule et de commande de moyens (8) de blocage du bras de support en position lorsque lesdites accélérations sont supérieures à un niveau déterminé, comprenant au moins une portion de couronne dentée (9) et un organe de blocage (10) relié à la partie fixe du réservoir (3) et déplaçable entre une position escamotée et une position active de blocage de la portion de couronne et donc du bras, sous la commande des moyens de détection (7), caractérisé en ce que l'organe de blocage comprend un levier de blocage (10) dont une extrémité est articulée (en 11) sur la partie fixe du réservoir et dont l'autre extrémité est adaptée pour coopérer avec la couronne dentée (9) pour bloquer le bras en position, une branche (12) d'actionnement de ce levier par ces moyens de détection s'étendant entre ses deux extrémités.

9. Dispositif selon la revendication 8, caractérisé en ce que les moyens de détection (7b) comprennent un détecteur à bille, logée dans une cuvette (5b) de la partie fixe du réservoir, en regard des moyens de blocage (8) et déplaçable entre une position initiale de repos et une position active de commande de ces moyens de blocage sous l'effet d'une accélération.

10. Dispositif selon la revendication 9, caractérisé en ce que ladite bille (13) est disposée en regard d'un évidement (12a) de la branche (12) d'actionnement du levier (10) pour amener celui-ci en position active de blocage lors du déplacement de la bille hors de sa position de repos sous l'effet d'une accélération supérieure audit niveau déterminé.

11. Dispositif selon l'une quelconque des revendictions 8 à 10, caractérisé en ce que la couronne dentée (9) comporte deux séries juxtaposées de crans (9a,9b) à faces de butée opposées, adaptées pour coopérer avec deux branches (10a, 10b) de blocage prévues à l'extrémité correspondante de l'organe de blocage (10).

FIG.1

EP 0 475 793 A2

FIG. 3

FIG. 2

FIG. 4

EP 0 475 793 A2

## FIG.5

## FIG.6